# EUROPÄISCHE PATENTANMELDUNG

(11) **EP 0 965 515 A2**
(43) Veröffentlichungstag der Anmeldung: **22.12.1999**
(21) Anmeldenummer: 99109132.3
(22) Anmeldetag: 08.05.1999
(51) Int. Cl.: B62D 25/12

(54) **Verkleidung eines Gelenkscharniers für eine Klappe, insbesondere für eine Kraftfahrzeug-Heckklappe**

(30) Priorität: 18.06.1998 DE 19827196
(71) Anmelder: Volkswagen Aktiengesellschaft, 38436 Wolfsburg (DE)
(72) Erfinder: Bekemeier, Frank, 38533 Rethen (DE); Arnheim, Hans-Rudolf, Dipl.-Ing., 38477 Jembke (DE); Tran, Ky-Tu, Dipl.-Ing., 38108 Braunschweig (DE); Massarczyk, Björn-Dennis, Dipl.-Ing., 38442 Wolfsburg (DE)

(57) **Zusammenfassung**

Eine Verkleidung eines Gelenkscharniers für eine Kraftfahrzeug-Heckklappe enthält als Innenverkleidung mehrere um eine gemeinsame Schwenkachse (9) relativ zueinander schwenkbare, sich teilweise überlappende Lamellen (5, 6, 7, 8), deren oberste (8) an einer oberen Abdeckung (11) des Gelenkscharniers gehalten ist. Diese ist aus zwei teleskopierenden Teilen (10, 13) zusammengesetzt, deren oberes (13) klappenseitig angelenkt (14) ist. Dadurch paßt sich die Verkleidung unterschiedlichen Konfigurationen des Gelenkscharniers selbsttätig an.

## Beschreibung

Die Erfindung betrifft eine Verkleidung gemäß dem Oberbegriff des Patentanspruchs 1.

Betrachtet man den bevorzugten Einsatzfall der Erfindung, nämlich bei einer Kraftfahrzeug-Heckklappe, so finden nahe den hinteren Seitenwandbereichen des Fahrzeugs angeordnete, möglichst schmal gehaltene Gelenkscharniere Einsatz, die in der Regel so gestaltet sind, daß ihre Lenker nicht eine reine Rotationsbewegung der Klappe erzeugen, sondern eine zusammengesetzte translatorische und rotierende Schwenkbewegung der Klappe. Dies dient der möglichst vollständigen Freigabe des Zugangs zum Heckraumbereich, beispielsweise zum Be- und Entladen.

Die hierbei verwendeten Gelenkscharniere sind, wie bemerkt, möglichst schmal gehalten, damit sie möglichst wenig Platz im Heckraum des Fahrzeugs einnehmen. Um eine Beschädigung beispielsweise von Gepäckstücken durch sich bewegende Bestandteile eines derartigen Gelenkscharniers zu vermeiden, ist es erforderlich, das Gelenkscharnier zumindest in Richtung nach innen, bezogen auf den Heckraum des Fahrzeugs, zu verkleiden.

Der Erfindung liegt die Aufgabe zugrunde, eine gattungsgemäße Verkleidung zu schaffen, die derart platzsparend ausgebildet ist, daß sie den durch die Bewegungen der Bestandteile des betreffenden Gelenkscharniers erforderlichen Platzbedarf praktisch nicht vergrößert.

Verständlicherweise geht es dabei nicht nur um den Schutz von Gepäckstücken oder dergleichen gegen Beschädigung durch sich bewegende Bestandteile des Gelenkscharniers oder um Beeinträchtigungen der Funktionsweise des Gelenkscharniers durch eingeklemmte Gegenstände, sondern auch um Schutz vor Verschmutzung und Diebstahl sowie um eine optimale optische Gestaltung.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Schlagwortartig kann man sagen, daß sich die erfindungsgemäße Verkleidung selbsttätig der jeweils durch die Funktion bedingten Form des zu verkleidenden Gelenkvierecks anpaßt. Als Innenverkleidung dienen im wesentlichen zumindest zwei, in der Regel aber mehr Lamellen, die am Boden, d.h. im Bereich der Basis des Gelenkvierecks, nebeneinanderliegend mittels einer gemeinsamen Schwenkachse gehalten sind, während ihre dieser Gelenkachse abgekehrten Bereiche unter Wahrung einer teilweisen gegenseitigen Überlappung fächerartig, d.h. winkelbildend, relativ zueinander verschoben werden können, wie dies der jeweiligen senkrechten Ausdehnung des Gelenkvierecks entspricht.

Da, wie bereits ausgeführt, in der Regel ein Gelenkscharnier für den betrachteten bevorzugten Einsatzfall und verständlicherweise auch für entsprechende andere Einsatzfälle so ausgelegt ist, daß es die Klappe sowohl translatorisch als rotatorisch bewegt, also schwenkt, um einen möglichst freien Zugang zu dem von ihr sonst zu verschließenden Raum zu gewährleisten, sieht die Erfindung für den allgemeinsten Einsatz gemäß Anspruch 4 und folgende eine das Gelenkscharnier oben übergreifende obere Abdeckung aus zumindest zwei teleskopierenden Teilen vor, von denen das oberste klappenfest angelenkt ist. Hier erfolgt also gleichzeitig sowohl eine Verschwenkung der oberen Abdeckung nebst den bereits beschriebenen Lamellen als auch eine Streckung bzw. Stauchung der oberen Abdeckung in Abhängigkeit von der jeweiligen Bewegung der Klappe.

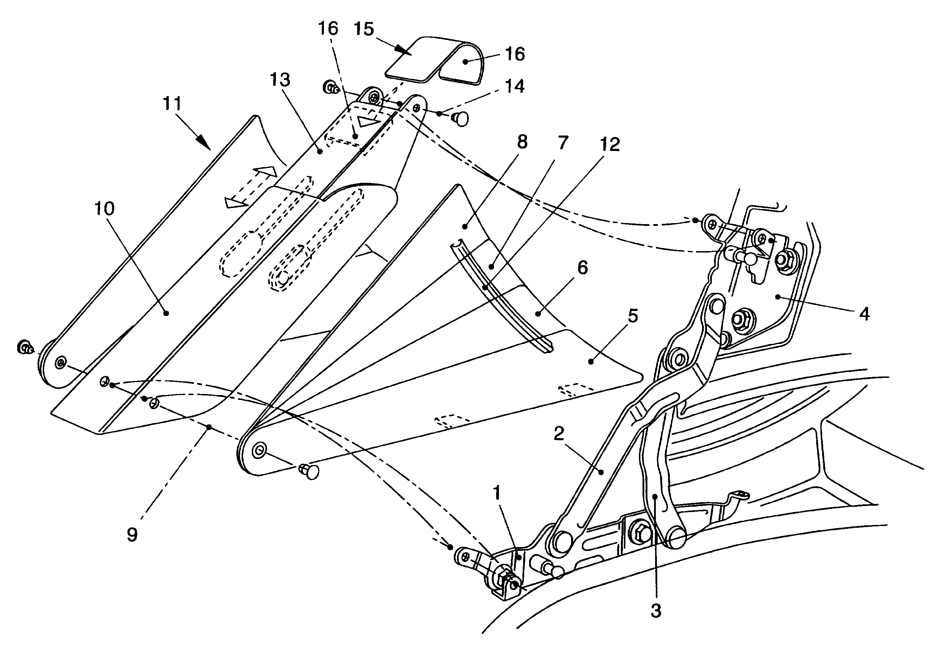

Ein Ausführungsbeispiel für diesen allgemeinen Fall wird im folgenden anhand der Zeichnung unter Bezugnahme auf den bevorzugten Einsatzfall, also für eine Heckklappe eines Kraftfahrzeugs, beschrieben, ohne daß hierdurch eine Beschränkung auf diesen Einsatz ausgesprochen sein soll. Die Zeichnung zeigt perspektivisch in einer Explosionsdarstellung nur die hier interessierenden Teile.

Betrachtet man zunächst das eigentliche Gelenkscharnier, so enthält es in diesem Ausführungsbeispiel die beiden schwenkbar an der bodenseitigen Basis 1 angelenkten Lenker 2 und 3, die unter Sicherstellung derart gewählter unterschiedlicher Übersetzungsverhältnisse an der an der nicht dargestellten Klappe montierten Scharniergrundplatte 4 angreifen, daß sie die Heckklappe aus einer im wesentlichen horizontalen Stellung bezüglich des Fahrzeugs in Richtung auf seine Heckscheibe derart schwenken, daß dann die Klappe in ihrer Endstellung im wesentlichen senkrecht verläuft. Die Klappe erfährt dabei eine echte Schwenkbewegung, nämlich eine Bewegung mit translatorischer und rotatorischer Komponente.

Der Erfindung liegt nun, wie gesagt, die Aufgabe zugrunde, dieses Gelenkscharnier, das als bekanntes Viergelenkscharnier ausgebildet ist, zu verkleiden, damit insbesondere in Richtung auf den verbleibenden Innenraum des Heckraums (in der Darstellung in Richtung nach hinten) eine möglichst staubdichte, störende Berührungen mit Koffern oder dergleichen vermeidende Abgrenzung geschaffen ist. In dieser Richtung, d.h. in Innenrichtung, löst diese Aufgabe eine Seitenverkleidung, die als wesentliche Bestandteile in diesem Ausführungsbeispiel vier Lamellen 5, 6, 7, 8, enthält, die alle um die gemeinsame, an der Basis 1 gehaltene Schwenkachse 9 schwenkbar sind, während ihre der Schwenkachse 9 abgekehrten Bereiche unter Wahrung einer teilweisen gegenseitigen Überlappung winkelbildend relativ zueinander verschwenkbar sind. Die unterste Lamelle 5 ist basisseitig festgelegt, sie nimmt also an Schwenkbewegungen nicht teil, dagegen ist die oberste Lamelle an dem Bestandteil 10 der allgemein mit 11 bezeichneten Abdeckung gehalten, so daß sie an Schwenkbewegungen des Teils 10 teilnimmt. Dieses ist ebenfalls an seinem unteren Ende mittels der gemeinsamen Schwenkachse 9 basis- oder bodenseitig angelenkt.

Damit auch die in diesem Ausführungsbeispiel zwei mittleren Lamellen 6 und 7 an Schwenkbewegungen teilnehmen, ist die Mitnahmeverbindung 12 vorgesehen. Im einfachsten Falle enthält die Mitnahmeverbindung 12 ein nur örtlich nahe den oberen oder unteren Kanten der Lamellen mit diesen verbundenes Zugband.

Die teleskopierende obere Abdeckung 11 enthält den weiteren Bestandteil 13, der teilweise in den bereits erläuterten unteren Bestandteil 10 hineinragt und mit seinem in der Figur oberen Endbereich um die Achse 14 schwenkbar an der Scharniergrundplatte 4 und damit an der Heckklappe befestigt ist. Das bedeutet, daß die obere Abdeckung 11 bei translatorischen Bewegungen der Heckklappe teleskopierend auseinandergezogen oder gestaucht wird, während die Lamellen 5, 6, 7 und 8 ihre relative Lage beibehalten; dagegen erfolgt bei einer rotatorischen Bewegung der Heckklappe eine Schwenkung sowohl der oberen Abdeckung 11 als auch der Lamellen 5, 6, 7 und 8 relativ zueinander.

Bei 15 erkennt man ein gebogenes Profilteil, das bei 16 teleskopierend in den oberen Teil 13 der Abdeckung 11 hineinragt und das mit seinem Endbereich 16 ebenfalls an der Scharniergrundplatte 4 befestigt ist. Damit ist eine Abdeckung der Anlenkung mit der Achse 14 für die obere Abdeckung 11 geschaffen.

Die Erfindung betrifft demgemäß eine gattungsgemäße Verkleidung, die mit robusten, leicht herzustellenden Mitteln einen auch staubdichten, praktisch keinen zusätzlichen Platz erfordernden Abschluß des Bewegungsraumes eines Gelenkscharniers bietet.

## Patentansprüche

1. Verkleidung eines Gelenkscharniers für eine Klappe, insbesondere für eine Kraftfahrzeug-Heckklappe, mit Lenkern, die, ausgehend von einer ortsfesten Basis, im wesentlichen in einer in Schwenkrichtung der Klappe verlaufenden Ebene zwischen einer basisnahen zusammengelegten Konfiguration (bei geschlossener Klappe) und einer auseinandergezogenen Konfiguration (bei geöffneter Klappe) schwenkbar sind, dadurch gekennzeichnet, daß als innenseitliche Verkleidung sich teilweise überlappende, einenends um eine gemeinsame basisseitige Schwenkachse (9) winkelbildend relativ zueinander schwenkbare Lamellen (5, 6, 7, 8) dienen, deren unterste (5) basisfest gehalten ist und deren oberste (8) an Schwenkbewegungen des obersten Lenkers (2) teilnehmend gehalten ist.

2. Verkleidung nach Anspruch 1, dadurch gekennzeichnet, daß bei Vorhandensein zumindest einer mittleren Lamelle (6, 7) zwischen den untersten und obersten Lamellen (5, 8) die mittlere Lamelle (6, 7) über eine Mitnahmeverbindung (12) mit zumindest einer anderen Lamelle (5, 8) derart gekoppelt ist, daß auch bei auseinandergezogener Konfiguration die mittlere Lamelle (6, 7) und ihr benachbarte Lamellen (5, 8) sich teilweise überlappen.

3. Verkleidung nach Anspruch 1 oder 2, dadurch gekennzeichnet, daß die oberste Lamelle (8) an einer oberen Abdeckung (11) des Gelenkscharniers gehalten ist, die einenends im Bereich der Basis (1) und anderenends an der Klappe angelenkt ist.

4. Verkleidung nach Anspruch 3, dadurch gekennzeichnet, daß die obere Abdeckung (11) zumindest zwei teleskopierende Teile (10, 13) enthält und die oberste Lamelle (8) an dem im Bereich der Basis (1) angelenkten unteren (10) der beiden Teile (10, 13) gehalten ist.

5. Verkleidung nach Anspruch 3 oder 4, dadurch gekennzeichnet, daß die obere Abdeckung (11) mittels der gemeinsamen Schwenkachse (9) angelenkt ist.

6. Verkleidung nach einem der Ansprüche 3 bis 5, dadurch gekennzeichnet, daß die obere Abdeckung (11) an eine klappenseitige Scharniergrundplatte (4) angelenkt ist.

7. Verkleidung nach einem der Ansprüche 3 bis 6, dadurch gekennzeichnet, daß die klappenseitige Anlenkung (14) der oberen Abdeckung (11) von einem mit dieser teleskopierenden klappenfesten Profilteil (15) übergriffen ist.

8. Verkleidung nach Anspruch 7, dadurch gekennzeichnet, daß das Profilteil (15) an einer klappenseitigen Scharniergrundplatte (4) befestigt ist.
